# EUROPEAN PATENT SPECIFICATION

(11) **EP 3 476 781 B1**
(45) Date of publication and mention of the grant of the patent: **01.02.2023**
(21) Application number: 18197943.6
(22) Date of filing: 01.10.2018
(51) Int. Cl.: B65G 47/86

(54) **GRIPPER UNIT FOR PACKAGING PLANTS**
GREIFEINHEIT FÜR VERPACKUNGSANLAGEN
UNITÉ DE PRÉHENSION DESTINÉE À DES USINES D'EMBALLAGE

(30) Priority: 25.10.2017 IT 201700121078
(43) Date of publication of application: 01.05.2019
(73) Proprietor: SMI S.p.A., 24121 Bergamo (IT)
(72) Inventor: MARELLI, Dario, I-24121 BERGAMO (IT)
(74) Representative: Long, Giorgio

(56) References cited:
- DE-A1-102007 054 388
- JP-B2- 5 476 837
- US-A1- 2012 223 468

## Description

The present invention relates to a gripper unit which can be used in systems for moving containers to and from operating units, for example, plastic bottle blowing units or filling units, in packaging plants.

In packaging plants, the movement of containers between the various operating units of the plant, each assigned to a specific processing step, occurs by means of linear conveyor systems (conveyor belts or the like) or rotary conveyor systems, i.e., the so-called distribution stars. The latter, in particular, are used in rotary plants which make use of carousels on which the containers undergo a particular process.

Such conveyor systems comprise a plurality of grippers configured to hold the containers (typically bottles or preforms) by the neck during the conveying route and to give or to receive the containers from a processing unit or from another gripper of a different conveyor.

The grippers may be of the passive type, i.e., the opening or closing thereof occurs by virtue of the counteraction of a spring acting on the two jaws, or of the active type, in which the opening is controlled by a special cam.

In rotary conveyor systems, the distribution stars couple at a point of tangency, in which the containers are conveyed at very high angular speeds and in a synchronized manner. This type of plant is, in fact, characterized by a high productivity.

However, it may happen that during the route, due to a malfunction, to a synchronization fault or to an accidentally present obstacle, the gripper is hit and, because of the high kinetic energies involved, it is damaged so as to become unusable. This incident has a double disadvantage: first of all, the operator has no way of noticing it until after the machine has been operating long enough to show a clear processing defect of the containers, caused by a failure to convey them at the damaged gripper; secondly, the repairing or replacement of the damaged gripper causes the plant to stop long enough to have negative effects on the productivity. JP 5 476 837 B2 discloses a gripper unit according to the preamble of claim 1.

The problem addressed by the present invention is to provide a gripper unit for a system for moving containers to and from a processing unit which allows to solve the problems of the background art and which allows to improve the productivity of the plant.

Such a problem is solved by a gripper unit as outlined in the accompanying claims, the definitions of which form an integral part of the present description.

Further features and advantages of the present invention will become more apparent from the description of some embodiments, given below by way of indicative and non-limiting example, with reference to the following Figures:

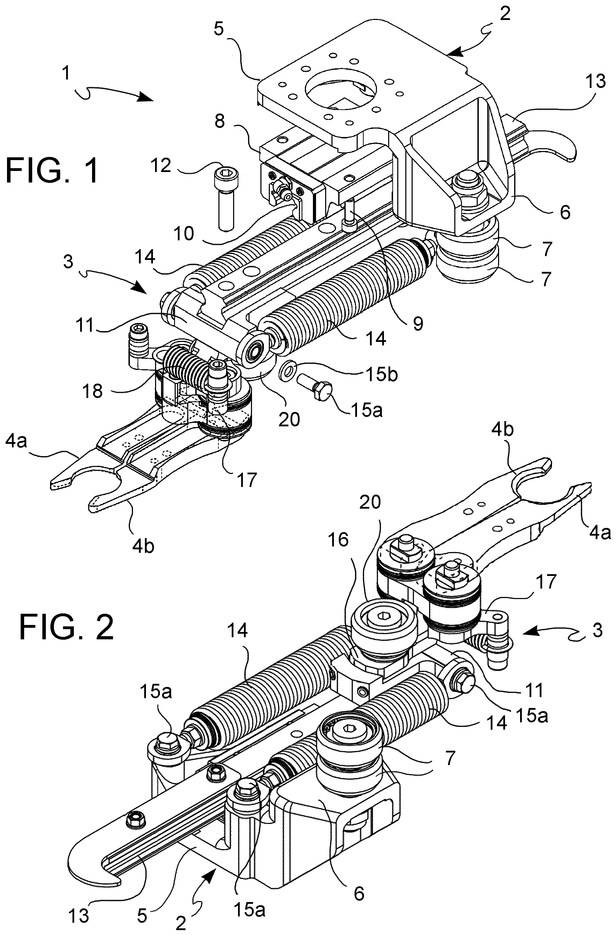

Figure 1 shows a top perspective view of the gripper unit according to the invention;
Figure 2 shows a bottom perspective view of the gripper unit of Figure 1;
Figure 3 shows an exploded perspective view of a detail of the gripper unit according to the invention;
Figure 4 shows a partial top plan view of the gripper unit according to the invention;
Figure 5A shows a view according to section IV-IV of Figure 4;
Figure 5B shows an enlarged sectional view of a detail of Figure 5A;
Figure 6 shows a partial top plan sectional view of the gripper unit according to the invention.

With reference to the Figures, the gripper unit, indicated as a whole with numeral reference 1, comprises a support assembly 2 and a gripper assembly 3 on which two jaws 4a, 4b are arranged, in which the gripper assembly 3 is movable with respect to the support assembly 2 between a retracted position and an extended position.

The support assembly 2 comprises a plate 5 which is pivotally coupled (by means of a hinge, not shown) to the conveyor system, in particular along the periphery of a distribution star, so as to rotate by a given positive or negative angle with respect to a radial direction of the distribution star. Thereby, the correct orientation of the gripper may be obtained during the step of transferring a container to or from another distribution star or an operating unit. To this end, the plate 5 comprises a tab 6, projecting laterally, on which at least one bearing 7 (in the embodiment of the Figures, two coaxial bearings 7) is mounted, configured to act as a driven element of a first cam (not shown) which will determine the orientation of the gripper unit 1.

Below the plate 5, a guide element 8, comprising a shaped groove 10 facing downwards, is integrally associated, for example, by means of screws 9.

The gripper assembly 3 comprises a support body 11 on which a shaped bar 13 is fastened - for example, by means of screws 12 - having a shaping complementary to that of the shaped groove 10 of the guide element 8 and configured to be slidingly coupled to the latter.

Opposite ends of return elastic means 14, in particular, a pair of return springs arranged on opposite sides of the support body 11, are fastened to the support body 11 and to the plate 5. Conventional fastening means, for example, a screw 15a and washer 15b set, are provided to fasten the springs 14 to the support body 11 and to the plate 5. The return elastic means 14 are provided to recall the gripper assembly 3 from the extended position, corresponding to a condition of transfer of the container from or to the gripper unit 1, to the retracted position, corresponding to a condition of exclusive support and conveying of the container by the gripper unit 1.

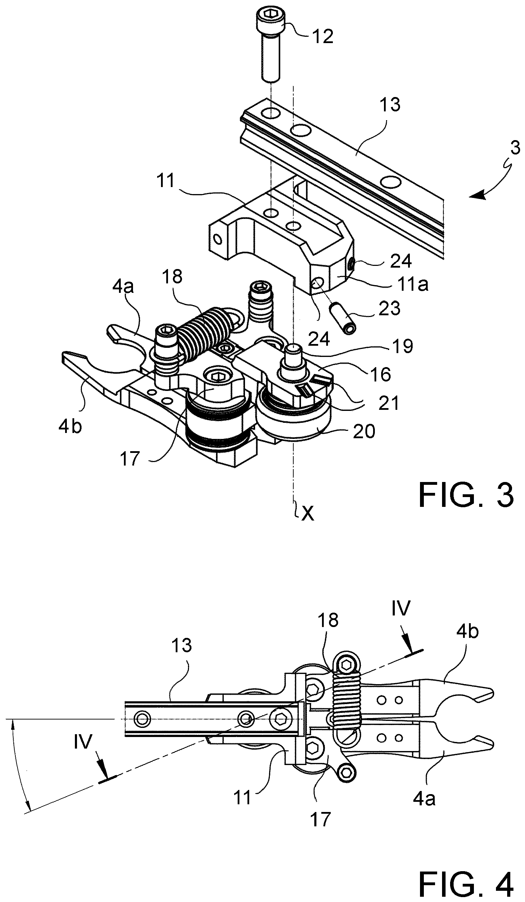

A movable plate 16 (Figure 3), to which the jaws support 17 is integrally connected, is pivotally coupled to the support body 11. The two jaws 4a, 4b are hinged on the jaws support 17. A return spring 18 conventionally connects the two jaws 4a, 4b, so as to make a gripper of the passive type. In other words, the opening of the jaws 4a, 4b occurs in counteraction with the return spring 18, due to the grabbing or release of the container by a grabbing means placed on a different conveyor system or on an operating unit. Vice versa, the closing of the jaws 4a, 4b is operated by the return spring 18 itself.

The movable plate 16 is hinged to the support body 11 by means of a pin 19, with which a pushing bearing 20 is further associated, below the support body 11. The pushing bearing 20 is configured to react against a second cam (not shown), arranged, with respect to the rotation axis of the distribution star on which the gripper unit 1 is mounted, at a radial distance greater than the first cam described above. The reaction of the pushing bearing 20 against the second cam, in a cam path, causes the gripper assembly 3 to move from the retracted position to the extended position, by means of the sliding of the shaped bar 13 in the shaped groove 10.

The pin 19 allows the rotation of the movable plate 16, on which the jaws support 17 is constrained, about the axis X of the pin 19. However, to avoid such a rotation being free, means for stopping the rotation are provided, configured to allow the rotation of the jaws support 17 about the axis X only in the case of transverse stress above a predefined threshold.

In order to provide such means for stopping the rotation, the movable plate 16 comprises two grooves 21, arranged on the face of the movable plate 16 which matches the support body 11. Such grooves are preferably arranged along directions converging towards the pin 19.

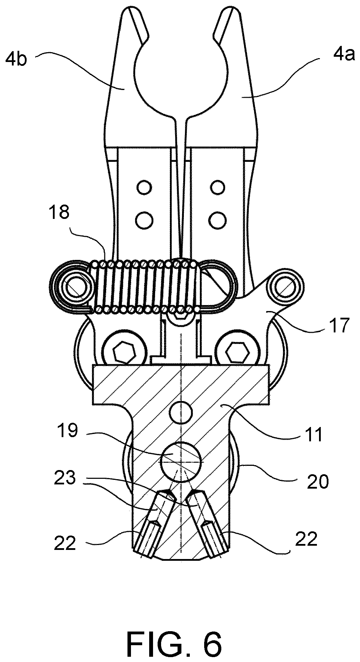

Similarly, the support body 11 comprises, on the face matching the movable plate 16, two complementary grooves 22 (Figure 6) which, once the gripper unit 1 is assembled, create with the grooves 21 respective holes in which they house pins 23.

The support body 11 comprises an insertion portion 11a for the pins 23 having a greater thickness with respect to the remaining part of the support body 11 and forming a step 11b therewith. The insertion portion 11a comprises two holes 24 in which the pins 23 are introduced and fastened so as to be integrated with the support body 11.

The semi-cylindrical portion of the pins 23, which protrudes from the surface of the support body 11 and is housed in the grooves 21 of the movable plate 16, therefore prevents the free rotation of the movable plate 16 with respect to the support body 11.

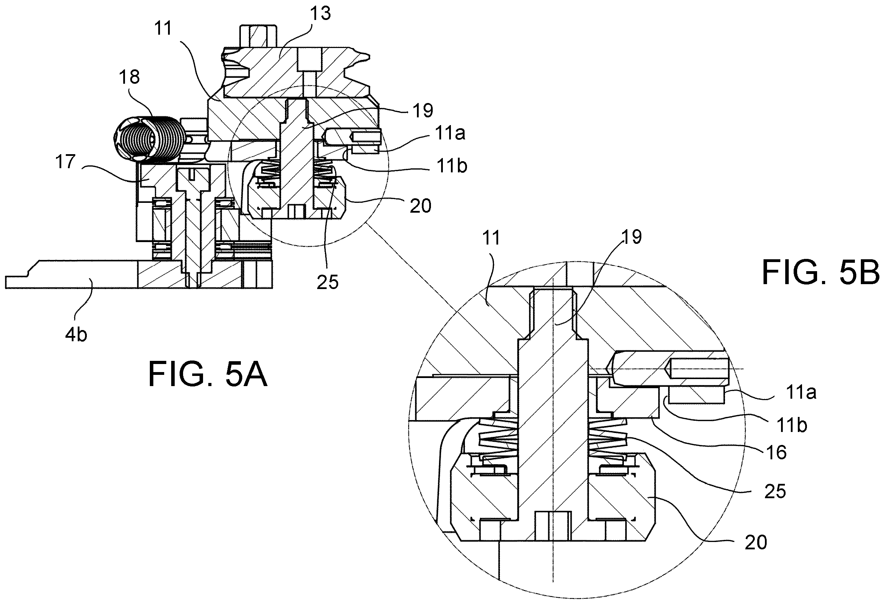

Preloaded elastic means 25 (Figures 5A-5B), preferably, a Belleville spring, are arranged between the pushing bearing 20 and the movable plate 16. Such elastic means 25 are preloaded so as to exert on the movable plate 16 - which, in turn, presses against the support body 11 - a hold pressure such as to allow the rotation of the movable plate 16, and therefore also of the jaws support 17, only if the transverse stress applied to the jaws 4a, 4b exceeds a certain predefined threshold. In this case, the spring 25 will allow the movable plate 16 to distance itself from the support body 11 just enough to disengage the pins 23 from the grooves 21 of the movable plate 16.

The gripper unit 1 in accordance with the invention thus allows avoiding damage to the jaws 4a, 4b and to the mechanism associated therewith in case of a transverse force accidentally applied thereto, since the jaws support 17 may rotate under the action of said force, overcoming the resistance of the pins 23. In other words, the gripper unit 1 of the invention overcomes the stiffness of the grippers of the background art by introducing a controlled freedom of movement which accompanies accidental impacts.

According to the invention the gripper unit 1 comprises, preferably at the movable plate 16 and support body 11 set, a proximity sensor (not shown), connected to a command and control unit of the conveyor system, configured to detect the dislocation of the jaws support 17 with respect to the support body 11, which signals the dislocation of the gripper which has suffered the accidental rotation, and therefore allows the operator to restore the functions thereof during a brief stop of the machine. Thereby, the productivity of the plant is only minimally affected by the incident.

It is apparent that only some particular embodiments of the present invention have been described, to which those skilled in the art can make all those modifications required for the adaptation thereof to particular applications, without however departing from the scope of protection of the present invention as defined by the appended claims.

## Claims

1. A gripper unit (1) for a system for moving containers to and from a processing unit of said containers, comprising a support assembly (2) and a gripper assembly (3), two jaws (4a, 4b) being arranged on the gripper assembly (3), wherein the gripper assembly (3) comprises a support body (11), wherein a jaws support (17) is pivotally coupled to the support body (11) and in that there are provided means for stopping the free rotation of the jaws support (17) configured so as to allow the rotation of the jaws support (17) only in the case of transverse stress above a predefined threshold, wherein the gripper assembly (3) is movable with respect to the support assembly (2) between a retracted position and an extended position, **characterised in that** the gripper assembly (3) comprises a pushing bearing (20) configured so as to react in a cam path to actuate said movement between said retracted position and said extended position, said pushing bearing (20) being hinged to a pin (19) and wherein preloaded elastic means (25) are arranged between said pushing bearing (20) and a movable plate (16),
**and in that** the gripper unit (1) comprises a proximity sensor, connected to a command and control unit of the conveyor system, configured so as to detect the dislocation of the jaws support (17) with respect to the support body (11).

2. The gripper unit (1) according to claim 1, wherein the jaws support (17) is pivotally connected to the support body (11) by means of a movable plate (16) integral with the jaws support (17), the movable plate (16) being hinged to the support body (11) by means of a pin (19) which forms a rotation axis (X) for the rotation of the jaws support (17).

3. The gripper unit (1) according to claim 2, wherein the movable plate (16) comprises at least one groove (21) and the support body (11) comprises at least one complementary groove (22), the respective at least one groove (21) and at least one complementary groove (22) being matching to form a hole for housing at least one pin (23) so as to make said stop means of the free rotation of the jaws support (17).

4. The gripper unit (1) according to claim 3, wherein said pins (23) are integral with the support body (11) and comprise a semi-cylindrical portion projecting from the surface of said support body (11) and which can be accommodated in said at least one groove (21) of the movable plate (16).

5. The gripper unit (1) according to claim 4, wherein the support body (11) comprises an insertion portion (11a) of the pins (23) having a greater thickness with respect to the remaining part of the support body (11) and forming a step (11b) therewith, wherein the insertion portion (11a) comprises two holes (24) wherein the pins (23) are introduced and fastened.

6. The gripper unit (1) according to any one of claims 1 to 5, wherein said preloaded elastic means (25), preferably a Belleville spring, exert a hold pressure on the movable plate (16), which in turn presses against the support body (11), the hold pressure being such as to allow the rotation of the movable plate (16), and therefore also of the jaws support (17), only if the transverse stress applied to the jaws (4a, 4b) exceeds said predefined threshold.

7. The gripper unit (1) according to any one of claims 1 to 6, wherein the support assembly (2) comprises a plate (5) pivotally coupled to the conveyor system, in particular along the periphery of a distribution star, so as to rotate by a given positive or negative angle with respect to a radial direction of the distribution star.

8. The gripper unit (1) according to any one of claims 1 to 7, wherein the support assembly (2) comprises a guide element (8) comprising a shaped groove (10) and wherein the gripper assembly (3) comprises a shaped bar (13) having a shaping complementary to the one of the shaped groove (10) of the guide element (8) and configured so as to slidingly couple to the guide element (8).

9. A conveyor system in packaging plants, comprising a plurality of gripper units (1) according to any one of claims 1 to 8.

10. The conveyor system according to claim 9, wherein said plurality of gripper units (1) is arranged along the periphery of at least one distribution star.

## Patentansprüche

1. Greifeinheit (1) für ein System zum Bewegen von Behältern zu und von einer Verarbeitungseinheit der Behälter, umfassend Trägeranordnung (2) und eine Greifanordnung (3), zwei Backen (4a, 4b), die an der Greifanordnung (3) angeordnet sind, wobei die Greifanordnung (3) einen Trägerkörper (11) umfasst, wobei ein Backenträger (17) schwenkbar mit dem Trägerkörper (11) gekoppelt ist und wobei Mittel zum Stoppen der freien Drehung des Backenträgers (17) bereitgestellt sind, die so konfiguriert sind, dass sie die Drehung des Backenträgers (17) nur im Falle einer Querbelastung über einem vordefinierten Schwellenwert erlauben, wobei die Greifanordnung (3) in Bezug auf die Trägeranordnung (2) zwischen einer zurückgezogenen Position und einer ausgefahrenen Position beweglich ist, **dadurch gekennzeichnet, dass** die Greifanordnung (3) ein Schiebelager (20) umfasst, das so konfiguriert ist, dass es in einer Nockenbahn reagiert, um die Bewegung zwischen der zurückgezogenen Position und der ausgefahrenen Position zu bewirken, wobei das Schiebelager (20) an einem Stift (19) schwenkbar angebracht ist und wobei vorgespannte elastische Mittel (25) zwischen dem Schiebelager (20) und einer beweglichen Platte (16) angeordnet sind,
**und wobei** die Greifeinheit (1) einen Näherungssensor umfasst, der mit einer Steuer- und Kontrolleinheit des Fördersystems verbunden ist und so konfiguriert ist, dass er die Verschiebung des Backenträgers (17) in Bezug auf den Trägerkörper (11) detektiert.

2. Greifeinheit (1) nach Anspruch 1, wobei der Backenträger (17) mittels einer beweglichen Platte (16), die mit dem Backenträger (17) integral ist, schwenkbar mit dem Trägerkörper (11) verbunden ist, wobei die bewegliche Platte (16) mittels eines Stifts (19), der eine Drehachse (X) für die Drehung des Backenträgers (17) bildet, an dem Trägerkörper (11) schwenkbar angebracht ist.

3. Greifeinheit (1) nach Anspruch 2, wobei die bewegliche Platte (16) mindestens eine Nut (21) umfasst und der Trägerkörper (11) mindestens eine komplementäre Nut (22) umfasst, wobei die jeweilige mindestens eine Nut (21) und die mindestens eine komplementäre Nut (22) so aufeinander abgestimmt sind, dass sie ein Loch zur Aufnahme von mindestens einem Stift (23) bilden, um das Anschlagmittel für die freie Drehung des Backenträgers (17) zu bilden.

4. Greifeinheit (1) nach Anspruch 3, wobei die Stifte (23) mit dem Trägerkörper (11) integral sind und einen halbzylindrischen Abschnitt umfassen, der von der Oberfläche des Trägerkörpers (11) vorsteht und der in der mindestens einen Nut (21) der beweglichen Platte (16) aufgenommen werden kann.

5. Greifeinheit (1) nach Anspruch 4, wobei der Trägerkörper (11) einen Einführungsabschnitt (11a) der Stifte (23) umfasst, der eine größere Dicke in Bezug auf den restlichen Teil des Trägerkörpers (11) aufweist und mit diesem eine Stufe (11b) bildet, wobei der Einführungsabschnitt (11a) zwei Löcher (24) umfasst, worin die Stifte (23) eingeführt und befestigt sind.

6. Greifeinheit (1) nach einem beliebigen der Ansprüche 1 bis 5, wobei die vorgespannten elastischen Mittel (25), vorzugsweise eine Tellerfeder, einen Haltedruck auf die bewegliche Platte (16) ausüben, die ihrerseits gegen den Trägerkörper (11) drückt, wobei der Haltedruck derart ist, dass er die Drehung der beweglichen Platte (16) und damit auch des Backenträgers (17) nur dann zulässt, wenn die Querspannung, die auf die Backen (4a, 4b) ausgeübt wird, den vordefinierten Schwellenwert überschreitet.

7. Greifeinheit (1) nach einem beliebigen der Ansprüche 1 bis 6, wobei die Trägeranordnung (2) eine Platte (5) umfasst, die schwenkbar mit dem Fördersystem gekoppelt ist, insbesondere entlang des Umfangs eines Verteilungssterns, so dass sie sich um einen bestimmten positiven oder negativen Winkel in Bezug auf eine radiale Richtung des Verteilungssterns dreht.

8. Greifeinheit (1) nach einem beliebigen der Ansprüche 1 bis 7, wobei die Trägeranordnung (2) ein Führungselement (8) umfassend eine Formnut (10) umfasst und wobei die Greifanordnung (3) einen Formstab (13) umfasst, der eine zu der Formnut (10) des Führungselements (8) komplementäre Formgebung aufweist und so ausgebildet ist, dass er gleitend mit dem Führungselement (8) koppelt.

9. Fördersystem in Verpackungsanlagen, umfassend eine Mehrzahl von Greifeinheiten (1) nach einem beliebigen der Ansprüche 1 bis 8.

10. Fördersystem nach Anspruch 9, wobei die Mehrzahl von Greifeinheiten (1) entlang des Umfangs von mindestens einem Verteilungsstern angeordnet ist.

## Revendications

1. Unité de préhension (1) pour un système pour déplacer des contenants vers et à partir d'une unité de traitement desdits contenants, comprenant un ensemble de support (2) et un ensemble de préhension (3), deux mâchoires (4a, 4b) étant agencées sur l'ensemble de préhension (3), dans laquelle l'ensemble de préhension (3) comprend un corps de support (11), dans laquelle un support de mâchoires (17) est accouplé de manière pivotante au corps de support (11) et en ce que sont prévus des moyens pour arrêter la rotation libre du support de mâchoires (17) configurés de manière à permettre la rotation du support de mâchoires (17) uniquement dans le cas d'une contrainte transversale au-dessus d'un seul prédéfini, dans laquelle l'ensemble de préhension (3) est mobile par rapport à l'ensemble de support (2) entre une position rentrée et une position sortie, **caractérisée en ce que** l'ensemble de préhension (3) comprend un palier de poussée (20) configuré de manière à réagir dans un trajet de came pour actionner ledit mouvement entre ladite position rentrée et ladite position sortie, ledit palier de poussée (20) étant articulé sur une broche (19) et dans laquelle des moyens élastiques préchargés (25) sont agencés entre ledit palier de poussée (20) et une plaque mobile (16),
et **en ce que** l'unité de préhension (1) comprend un capteur de proximité, connecté à une unité de commande et de contrôle du système transporteur, configuré de manière à détecter le décalage du support de mâchoires (17) par rapport au corps de support (11).

2. Unité de préhension (1) selon la revendication 1, dans laquelle le support de mâchoires (17) est relié de manière pivotante au corps de support (11) au moyen d'une plaque mobile (16) faisant partie intégrante du support de mâchoires (17), la plaque mobile (16) étant articulée sur le corps de support (11) au moyen d'une broche (19) qui forme un axe de rotation (X) pour la rotation du support de mâchoires (17).

3. Unité de préhension (1) selon la revendication 2, dans laquelle la plaque mobile (16) comprend au moins une rainure (21) et le corps de support (11) comprend au moins une rainure complémentaire (22), les au moins une rainure (21) et au moins une rainure complémentaire (22) respectives s'appariant pour former un trou pour loger au moins une broche (23) de manière à créer lesdits moyens d'arrêt de la rotation libre du support de mâchoires (17).

4. Unité de préhension (1) selon la revendication 3, dans laquelle lesdites broches (23) font partie intégrante du corps de support (11) et comprennent une partie semi-cylindrique faisant saillie de la surface dudit corps de support (11) et qui peut être reçue dans ladite au moins une rainure (21) de la plaque mobile (16).

5. Unité de préhension (1) selon la revendication 4, dans laquelle le corps de support (11) comprend une partie d'insertion (11a) des broches (23) présentant une épaisseur plus importante par rapport à la partie restante du corps de support (11) et formant un gradin (11b) avec celle-ci, dans laquelle la partie d'insertion (11a) comprend deux trous (24) dans lesquels les broches (23) sont introduites et fixées.

6. Unité de préhension (1) selon l'une quelconque des revendications 1 à 5, dans laquelle lesdits moyens élastiques préchargés (25), de préférence une rondelle Belleville, exercent une pression de retenue sur la plaque mobile (16), qui presse à son tour contre le corps de support (11), la pression de retenue étant telle qu'elle permet la rotation de la plaque mobile (16), et par conséquent également du support de mâchoires (17), uniquement si la contrainte transversale appliquée aux mâchoires (4a, 4b) dépasse ledit seuil prédéfini.

7. Unité de préhension (1) selon l'une quelconque des revendications 1 à 6, dans laquelle l'ensemble de support (2) comprend une plaque (5) accouplée de manière pivotante au système transporteur, en particulier le long de la périphérie d'une étoile de distribution, de manière à être amenée en rotation d'un angle positif ou négatif donné par rapport à une direction radiale de l'étoile de distribution.

8. Unité de préhension (1) selon l'une quelconque des revendications 1 à 7, dans laquelle l'ensemble de support (2) comprend un élément de guidage (8) comprenant une rainure (10) façonnée et dans laquelle l'ensemble de préhension (3) comprend une barre façonnée (13) présentant un façonnage complémentaire de celui de la rainure (10) façonnée de l'élément de guidage (8) et configurée de manière à s'accoupler de manière coulissante à l'élément de guidage (8).

9. Système transporteur dans des usines d'emballage, comprenant une pluralité d'unités de préhension (1) selon l'une quelconque des revendications 1 à 8.

10. Système transporteur selon la revendication 9, dans lequel ladite pluralité d'unités de préhension (1) est agencée le long de la périphérie d'au moins une étoile de distribution.
